# EUROPEAN PATENT APPLICATION

(11) **EP 4 844 264 A1**
(43) Date of publication of application: **25.11.2026**
(21) Application number: 26175609.2
(22) Date of filing: 30.04.2026
(51) Int. Cl.: F17C 13/04

(54) **HIGH-PRESSURE GAS CYLINDER**

(30) Priority: 21.05.2025 TW 114205127 U
(71) Applicant: G-Shang Metal Corporation, Taichung City (TW)
(72) Inventor: Yi, Chen-Hsing, 437106 Taichung City (TW)
(74) Representative: Ter Meer und Partner mbB

(57) **Abstract**

A high-pressure gas cylinder (100) including a liner (10) having a bottle body (12) and a neck (14), a boss member (20) having a boss (22) and a shoulder (24), a seal (30), and a composite material shell (40) is provided. The bottle body (12) forms a shoulder receiving portion (123) adjacent to the neck (14). The boss (22) forms a straight hole portion (221) and a socket portion (222) respectively at sides away from and close to the liner (10). An annular ridge (223) is connected between the straight hole portion (221) and the socket portion (222), and the neck (14) is disposed inside the socket portion (222). The shoulder (24) abuts against the shoulder receiving portion (123). The seal (30) is disposed between the neck (14) and the annular ridge (223). The composite material shell (40) covers the bottle body (12), the shoulder (24), and the boss (22).

## Description

### BACKGROUND

### Technical Field

The present invention relates to a gas cylinder, and particularly relates to a high-pressure gas cylinder.

### Description of Related Art

Since hydrogen may cause hydrogen embrittlement in metals, which affects the structural strength of metal high-pressure gas cylinders for gas storage, conventional hydrogen storage gas cylinders mostly employ a plastic liner to ensure safety during hydrogen storage. The hydrogen storage gas cylinder typically includes a plastic liner and a metal boss combined with the plastic liner, with a carbon fiber shell formed by curing resin-impregnated fibers wound around the surfaces of the plastic liner and the metal boss, thereby enabling the hydrogen storage gas cylinder to store hydrogen and withstand high gas pressure.

However, the aforementioned conventional hydrogen storage gas cylinders still have certain deficiencies. Due to the existence of a gap between the metal boss and the plastic liner, if hydrogen leaks through the gap between the metal boss and the plastic liner, the high-pressure hydrogen will burst outward and simultaneously damage the carbon fiber shell, causing structural damage to the hydrogen storage gas cylinder and rendering it unable to continue to withstand pressure. Therefore, improvements are necessary to enhance the structural reliability of the hydrogen storage gas cylinder.

### SUMMARY

The present invention provides a high-pressure gas cylinder that prevents structural damage caused by gas leakage to enhance structural reliability.

The present invention provides a high-pressure gas cylinder including a liner, a boss member, a seal, and a composite material shell. The liner includes a bottle body and a neck connected to each other. The bottle body forms a shoulder receiving portion at a part adjacent to the neck. The boss member includes a boss and a shoulder, wherein an inner circumferential surface of the boss forms a straight hole portion and a socket portion respectively at sides away from and close to the liner, and an inner diameter of the socket portion is larger than an inner diameter of the straight hole portion. An annular ridge is connected between the straight hole portion and the socket portion, and the neck is disposed inside the socket portion of the boss. The shoulder is connected to one end of the boss close to the liner and abuts against the shoulder receiving portion. The seal is sealingly disposed between an outer end of the neck and the annular ridge. The composite material shell covers an outer surface of the bottle body, an outer surface of the shoulder, and a part of an outer surface of the boss close to the shoulder.

Based on the above, by sealingly disposing the seal between the outer end of the neck and the annular ridge, the airtightness between the liner and the boss member is ensured. Thus, when high-pressure gas is stored inside the liner, gas leakage from the gap between the liner and the boss member is avoided, preventing internal damage to the structure of the composite material shell, thereby enhancing the reliability of the high-pressure gas cylinder for storing high-pressure gas.

To make the above features and advantages of the present invention more apparent and understandable, embodiments are specifically provided below and described in detail with the accompanying drawings as follows.

### BRIEF DESCRIPTION OF THE DRAWINGS

FIG. 1 is a schematic diagram of a high-pressure gas cylinder according to a first embodiment of the present invention.
FIG. 2 is an exploded schematic diagram of a liner, a boss member, and a seal of the high-pressure gas cylinder according to the first embodiment of the present invention.
FIG.3 is a cross-sectional schematic diagram of the liner, the boss member, and the seal of FIG.2 in an exploded state.
FIG. 4 is a partial enlarged schematic diagram of FIG. 3.
FIG. 5A is a cross-sectional schematic diagram of the high-pressure gas cylinder according to the first embodiment of the present invention.
FIG. 5B is a partial enlarged schematic diagram of region 5B in FIG. 5A.
FIG.5C is a schematic diagram of a valve locked into a straight hole portion of a boss of FIG.5B.
FIG. 6 is a partial cross-sectional schematic diagram of the high-pressure gas cylinder according to the second embodiment of the present invention.
FIG. 7 is a partial cross-sectional schematic diagram of the high-pressure gas cylinder according to the third embodiment of the present invention

### DESCRIPTION OF THE EMBODIMENTS

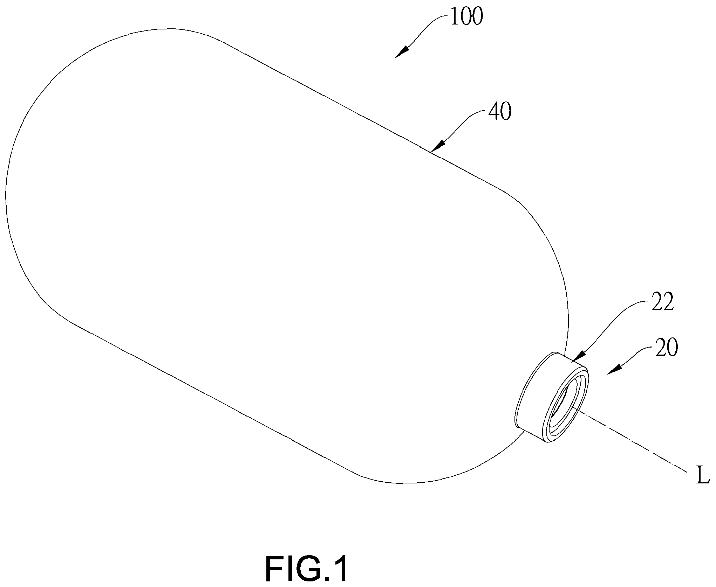

Please refer to FIG. 1 to FIG. 3, in the present embodiment, the high-pressure gas cylinder 100 includes a liner 10, a boss member 20, a seal 30, and a composite material shell 40, wherein the liner 10 is made of plastic material, and the boss member 20 is made of metal.

The liner 10 has a center line L at the center thereof, and the symmetry of the liner 10 is defined by the center line L. In detail, the liner 10 includes a bottle body 12 and a neck 14 connected to each other. The bottle body 12 is a bottle extending in a direction of the center line L. One end of the two ends of the bottle body 12 along the center line L is a closed end 121, and the other end forms a bottle mouth 122. The neck 14 is connected to the periphery of the bottle mouth 122. The bottle body 12 forms a shoulder receiving portion 123 at the part adjacent to the neck 14. The outer surface of the shoulder receiving portion 123 has a shoulder recess 124.

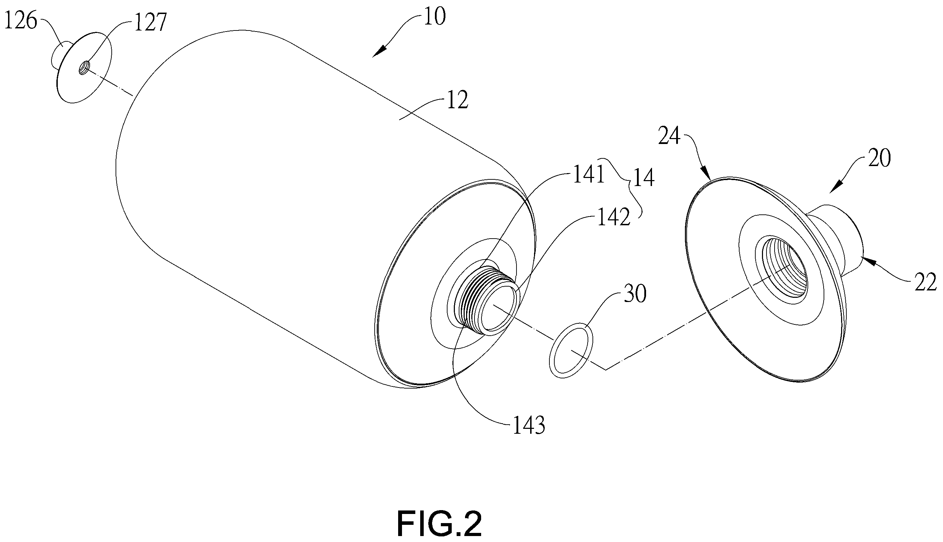

As shown in FIG. 2, FIG. 3, and FIG. 5A, a post 125 is formed at the center of one end of the bottle body 12 away from the neck 14. The post 125 is a screw rod, and protrudes toward the direction away from the neck 14. A tail block 126 is set to fit with the post 125, and the tail block 126 fits with the post 125 to form a receiving hole 127. The receiving hole 127 is a screw hole, and is screwed and fixed to the post 125.

In other embodiments, the post 125 may be set as a straight rod body, and the receiving hole 127 of the tail block 126 may be set as a hole fitting with the post 125. The tail block 126 fits onto the post 125 with the receiving hole 127, and the tail block 126 is combined to the end of the bottle body 12 having the post 125 by bonding and fixing the inner surface of the tail block 126 to the outer surface of the closed end 121.

As shown in FIG. 2 to FIG. 4 and FIG. 5B, the neck 14 is a straight tube extending along the center line L. One end of the neck 14 toward the bottle body 12 is connected to the periphery of the bottle mouth 122. The neck 14 includes a neck body 141 connected to the bottle body 12. Specifically, the inner end of the neck body 141 is connected to the periphery of the bottle mouth 122. The outer end surface of the neck body 141 forms an insert ring 142. The inner diameter of the insert ring 142 is larger than the inner diameter of the neck body 141. The outer diameter of the insert ring 142 is smaller than the outer diameter of the neck body 141. The insert ring 142 protrudes from the outer end surface of the neck body 141 in the direction of the center line L. In addition, an external thread 143 is formed on the outer circumferential surface of the neck body 141.

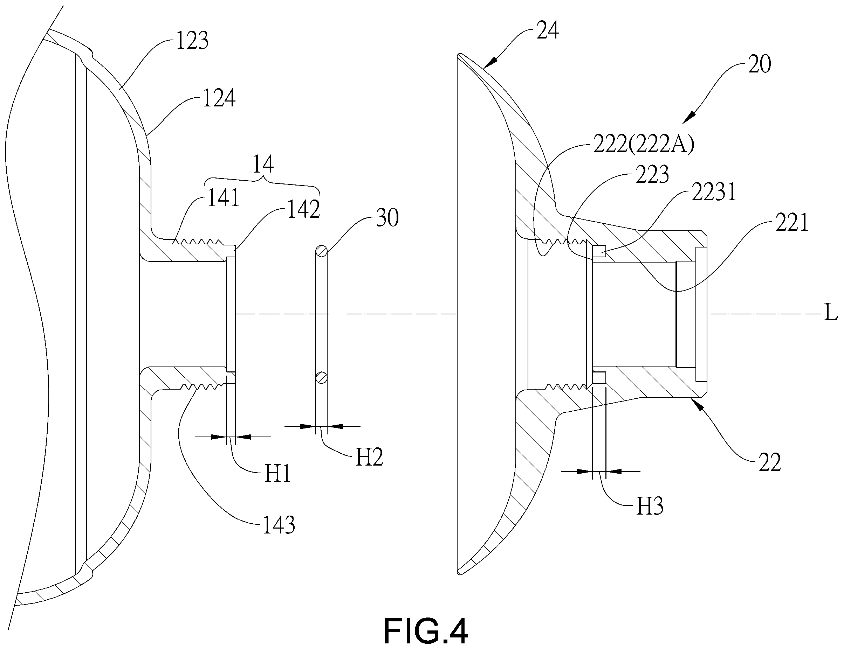

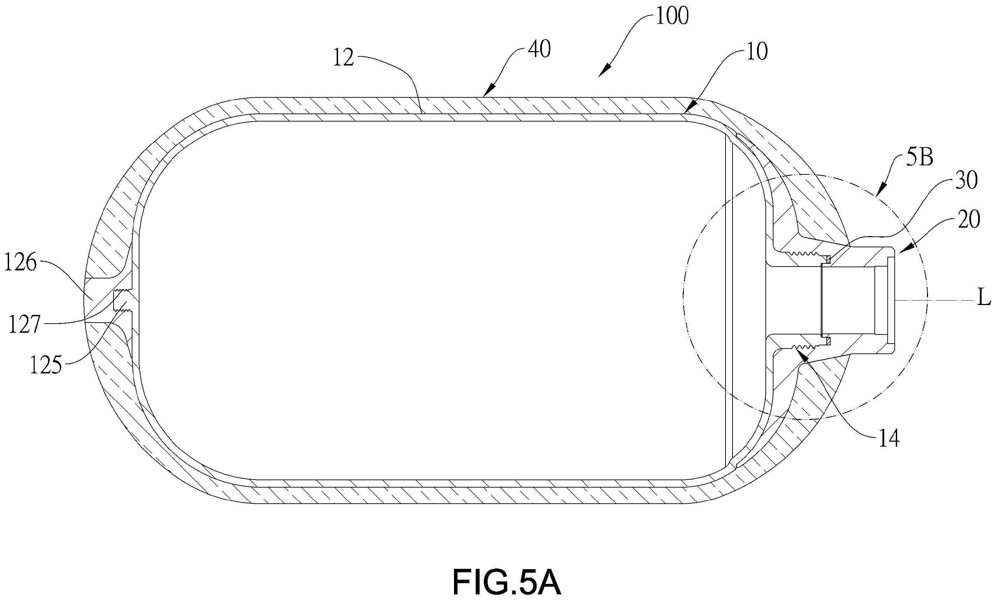

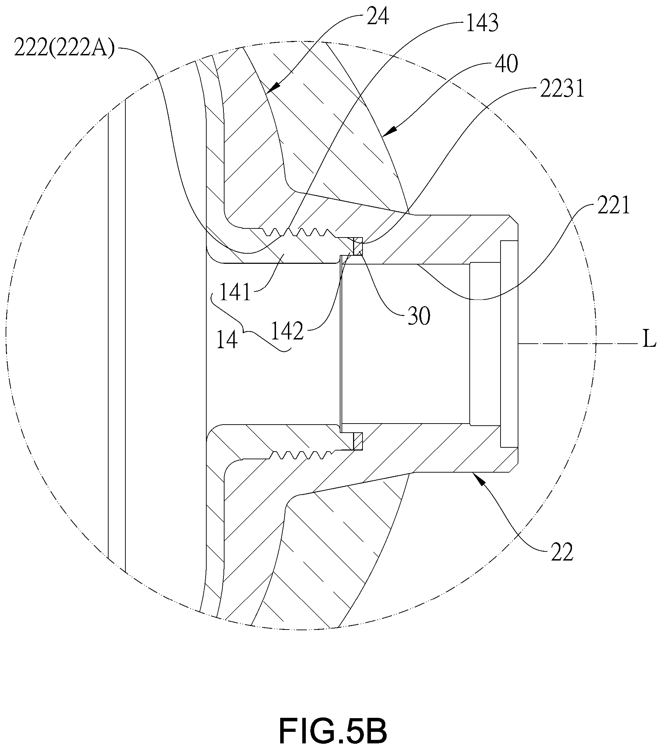

As shown in FIG. 4, FIG. 5A, and FIG. 5B, the boss member 20 is connected to the liner 10, and includes a boss 22 and a shoulder 24. The boss 22 is a straight tube extending in the direction of the center line L, and the inner circumferential surface of the boss 22 forms a straight hole portion 221 and a socket portion 222 respectively at the sides away from and close to the liner 10. The inner diameter of the socket portion 222 is larger than the inner diameter of the straight hole portion 221, and the inner circumferential surface of the socket portion 222 forms an internal thread 222A. An annular ridge 223 is connected between the straight hole portion 221 and the socket portion 222.

The annular ridge 223 serves as a critical sealing interface, and has a seal groove 2231. Specifically, the seal groove 2231 is an annular groove centered on the center line L, wherein the diameter of the inner circumferential surface of the seal groove 2231 is substantially equal to the inner diameter of the insert ring 142, and the diameter of the outer circumferential surface of the seal groove 2231 is substantially equal to the outer diameter of the insert ring 142.

As shown in FIG. 4 and FIG. 5B, the neck 14 of the liner 10 is disposed inside the socket portion 222 of the boss 22. Specifically, the neck 14 is screwed to the internal thread 222A of the boss 22 by the external thread 143, so that the boss member 20 is fixed to the end of the liner 10 having the neck 14 in the direction of the center line L. The neck body 141 is disposed inside the socket portion 222 of the boss 22 by screwing the external thread 143 to the internal thread 222A, while the insert ring 142 of the neck 14 is inserted into the seal groove 2231 in the direction of the center line L, so that the outer end of the insert ring 142 and the inner wall of the seal groove 2231 are opposite in the direction of the center line L.

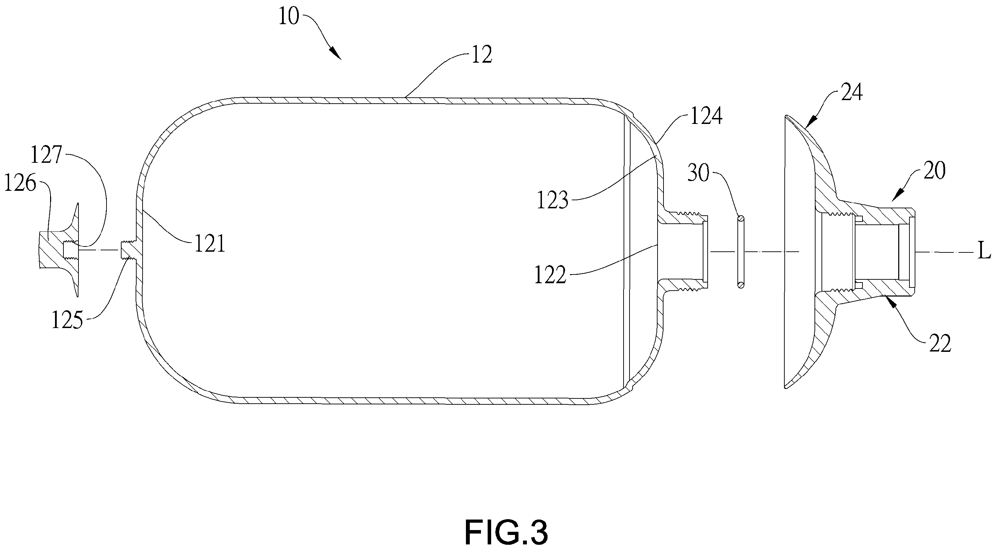

As shown in FIG. 3, FIG. 4, FIG. 5A, and FIG. 5B, the inner circumferential surface of the neck body 141 of the neck 14 and the inner circumferential surface of the straight hole portion 221 are coaxial and have the same length of inner diameter, so that after the boss 22 of the boss member 20 and the neck 14 are combined, the inner circumferential surface of the neck body 141 and the inner circumferential surface of the straight hole portion 221 are aligned to be continuous and tubular. The shoulder 24 is an annular ring body with the inner circumferential part curved arcuately toward the outer circumferential part. The inner circumferential edge of the shoulder 24 is connected to one end of the boss 22 close to the liner 10, and the shoulder 24 abuts against the shoulder receiving portion 123 of the bottle body 12. Furthermore, the shoulder 24 is fitted into the shoulder recess 124 to ensure tight fitting.

In other embodiments, the outer circumferential surface of the neck body 141 may not be provided with the external thread 143, and the inner circumferential surface of the socket portion 222 may not be provided with the internal thread 222A. The neck body 141 is inserted into the socket portion 222 of the boss 22, and the boss member 20 is fixed to the end of the liner 10 having the neck 14 in the direction of the center line L by bonding the shoulder 24 to the shoulder recess 124 with an adhesive.

As shown in FIG. 2 to FIG. 4 and FIG. 5B, the seal 30 is sealingly disposed between the outer end of the neck 14 and the annular ridge 223 of the boss 22, so that the liner 10 and the boss member 20 are in an airtight state to avoid leakage of high-pressure gas stored in the liner 10. Specifically, the seal 30 is a sealing ring made of an elastic body of rubber or plastic, and is fitted in the seal groove 2231 of the annular ridge 223.

As shown in FIG. 4 and FIG. 5B, the sum of the depth H1 of the insert ring 142 inserted into the seal groove 2231 in the direction of the center line L and the thickness H2 of the seal 30 in the uncompressed state (i.e., without compression in the direction of the center line L) is greater than the depth H3 of the seal groove 2231 in the direction of the center line L. Thereby, the outer end of the insert ring 142 and the inner wall of the seal groove 2231 ensure that the seal 30 is sealed between the outer end of the insert ring 142 and the inner wall of the seal groove 2231 by clamping the seal 30.

Specifically, the thickness H2 of the seal 30 is smaller than the depth H3 of the seal groove 2231, and the depth H1 of the insert ring 142 inserted into the seal groove 2231 is greater than the difference between the depth H3 of the seal groove 2231 and the thickness H2 of the seal 30. Accordingly, after the insert ring 142 is inserted into the seal groove 2231, the seal 30 is compressed by the insert ring 142 and expands in the radial direction perpendicular to the center line L to tightly contact the inner wall of the seal groove 2231. The seal 30 compressed by the insert ring 142 can not only resist high pressure, but also avoid gas leakage.

As shown in FIG. 1, FIG. 5A and FIG. 5B, the composite material shell 40 covers the outer surface of the bottle body 12, the outer circumferential surface of the tail block 126, the outer surface of the shoulder 24, and the part of the outer surface of the boss 22 close to the shoulder 24. The composite material shell 40 is formed by tightly winding composite material fiber prepreg, such as carbon fiber prepreg, around the outer circumferential surface of the bottle body 12, the outer circumferential surface of the tail block 126, the outer surface of the shoulder 24, and the part of the outer surface of the boss 22 close to the shoulder 24, and then curing the wound prepreg to form a rigid shell. Through the tight covering of the composite material shell 40, the ability of the liner 10 of the high-pressure gas cylinder 100 to withstand high internal pressure is increased, and the liner 10 and the boss member 20 are maintained in a tightly engaged state. The rigid structure of the composite material shell 40 itself also provides a protective effect for the high-pressure gas cylinder 100.

In the present embodiment, the high-pressure gas cylinder 100 connects to gas supply equipment through the boss 22 of the boss member 20, receives high-pressure gas injection, and after closing the boss 22, stores high-pressure gas in the space inside the liner 10. The high-pressure gas cylinder 100 ensures airtightness between the neck 14 and the boss 22 by clamping the seal 30 between the outer end of the insert ring 142 and the inner wall of the seal groove 2231. Thus, high-pressure gas stored inside the liner 10 is prevented from leaking through the gap between the liner 10 and the boss member 20, thereby protecting the composite material shell 40 from damage by leaked high-pressure gas and enhancing the structural reliability.

As shown in FIG. 5A and FIG. 5B, in the present embodiment, the liner 10 and the boss member 20 is sealed by clamping the seal 30 between the outer end of the insert ring 142 and the inner wall of the seal groove 2231. In other embodiments, the seal may be formed by curing an adhesive. Specifically, the adhesive is first filled into the seal groove 2231, then the insert ring 142 is inserted into the seal groove 2231 and contacts the adhesive, and then the adhesive is cured to form the seal that fully fills the cavity between the insert ring 142 and the inner wall of the seal groove 2231, ensuring no gap exists between the seal and the respective surfaces of the insert ring 142 and the seal groove 2231.

On the other hand, in addition to the boss member 20 being bonded to the end of the liner 10 having the neck 14 by adhesive bonding, the outer circumferential surface of the neck body 141 of the neck 14 and the inner circumferential surface of the socket portion 222 may also be screwed together by forming internal and external threads, or the boss member 20 and the liner 10 may be combined by tightly fitting the neck body 141 into the socket portion 222.

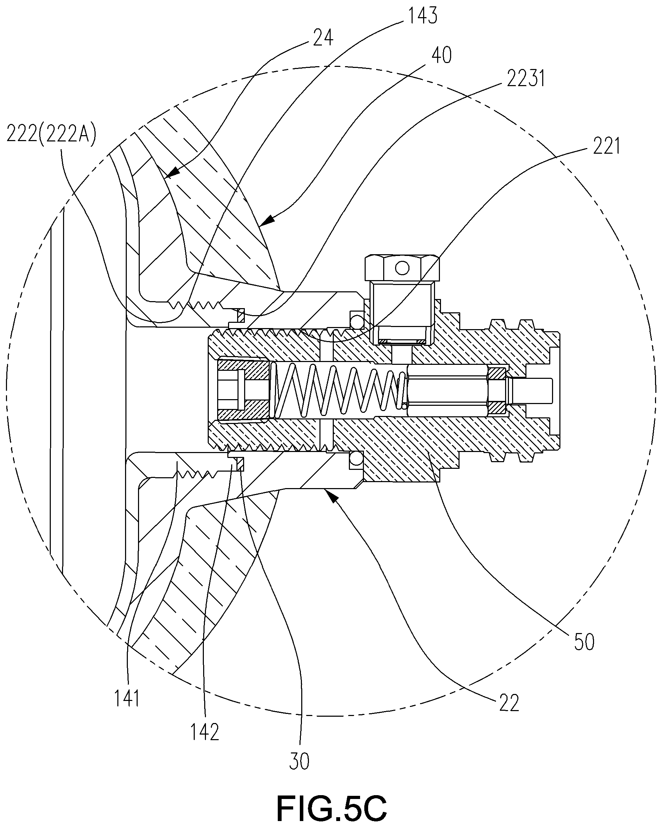

As shown in FIG. 5B and FIG. 5C, the boss 22 is installed with a valve 50. Specifically, the valve 50 is inserted into the straight hole portion 221 and is screwed and fixed to the boss 22. The valve 50 further compress the seal 30, ensuring that the seal 30 tightly contacts the insert ring 142 and the inner wall of the seal groove 2231 in the direction along the center line L and in the radial direction perpendicular to the center line L, to enhance airtightness.

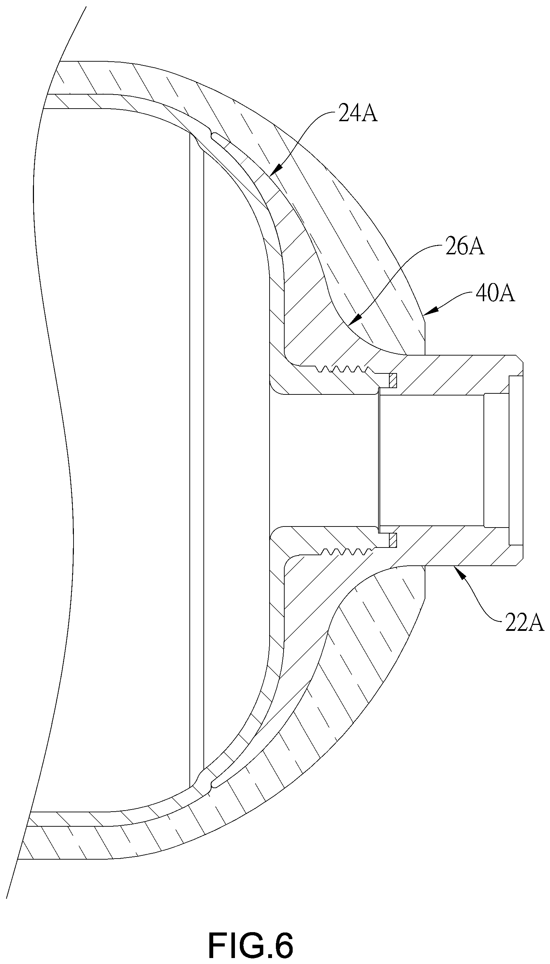

Please refer to FIG. 6, different from the first embodiment, in the present embodiment, an annular concave surface 26A is formed between the outer circumferential surface of the boss 22A and the outer circumferential surface of the shoulder 24A. This ensures that the prepreg for forming the composite material shell 40A is more easily wound at the position of the annular concave surface 26A, thereby facilitating the processing and formation of the composite material shell 40A. The remaining structure of the present embodiment is the same as or similar to that of the first embodiment, and thus the description thereof is omitted.

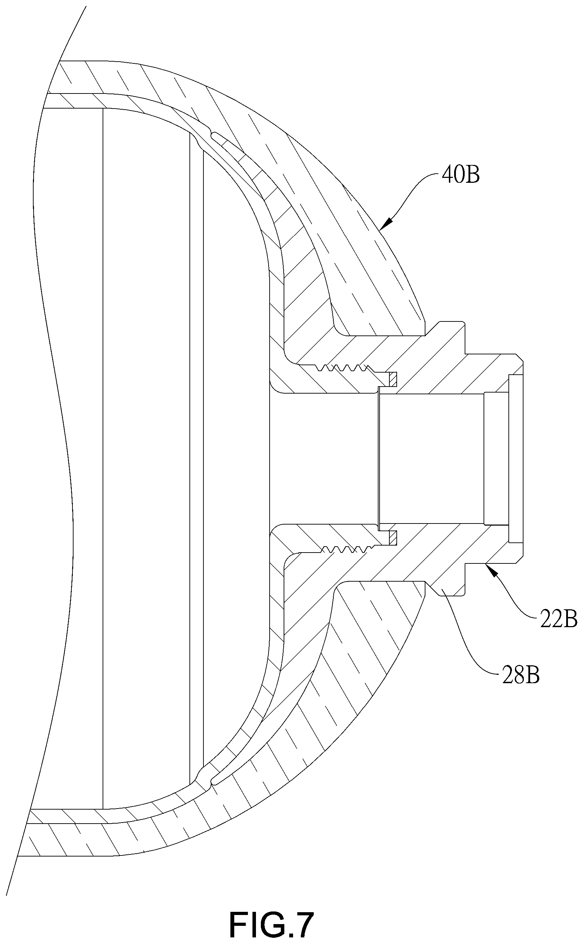

Please refer to FIG. 7, different from the first embodiment, in the present embodiment, the middle of the outer circumferential surface of the boss 22B has a protruding ring 28B, and the protruding ring 28B protrudes from the outer circumferential surface of the boss 22B. The portion of the composite material shell 40B corresponding to the boss 22B covers the portion of the outer circumferential surface of the boss 22B that is within the protruding ring 28B. Thereby, when the boss 22B is connected to gas supply equipment, the protruding ring 28B prevents the equipment from directly impacting the composite material shell 40B to protect the composite material shell 40B. The remaining structure of the present embodiment is the same as or similar to that of the first embodiment, and thus the description thereof is omitted.

In summary, by clamping the seal between the outer end of the insert ring and the inner wall of the seal groove, the airtightness between the neck and the boss is ensured. Thus, the high-pressure gas stored inside the liner is prevented from leaking through the gap between the liner and the boss member, preventing the composite material shell from being damaged by the leaked high-pressure gas, thereby improving the reliability of the high-pressure gas cylinder for storing high-pressure gas.

## Claims

1. A high-pressure gas cylinder (100), comprising:
a liner (10), comprising a bottle body (12) and a neck (14) connected to each other, wherein the bottle body (12) forms a shoulder receiving portion (123) at a part adjacent to the neck (14);
a boss member (20), comprising:
a boss (22, 22A, 22B), wherein an inner circumferential surface of the boss (22, 22A, 22B) forms a straight hole portion (221) and a socket portion (222) respectively at sides away from and close to the liner (10), and an inner diameter of the socket portion (222) is larger than an inner diameter of the straight hole portion (221), an annular ridge (223) is connected between the straight hole portion (221) and the socket portion (222), and the neck (14) is disposed inside the socket portion (222) of the boss (22, 22A, 22B); and
a shoulder (24, 24A), connected to an end of the boss (22, 22A, 22B) close to the liner (10), and abutting against the shoulder receiving portion (123);
a seal (30), sealingly disposed between an outer end of the neck (14) and the annular ridge (223); and
a composite material shell (40, 40A, 40B), covering an outer surface of the bottle body (12), an outer surface of the shoulder (24, 24A), and a part of an outer surface of the boss (22, 22A, 22B) close to the shoulder (24, 24A).

2. The high-pressure gas cylinder (100) as claimed in claim 1, wherein the annular ridge (223) has a seal groove (2231), and the seal (30) is formed by curing an adhesive filled in the seal groove (2231).

3. The high-pressure gas cylinder (100) as claimed in claim 1, wherein the annular ridge (223) has a seal groove (2231), and the seal (30) is a sealing ring fitted in the seal groove (2231).

4. The high-pressure gas cylinder (100) as claimed in claim 1, wherein the neck (14) comprises a neck body (141) connected to the bottle body (12), and the neck body (141) is disposed inside the socket portion (222).

5. The high-pressure gas cylinder (100) as claimed in claim 4, wherein an inner circumferential surface of the neck body (141) and an inner circumferential surface of the straight hole portion (221) are coaxial and have equal inner diameters.

6. The high-pressure gas cylinder (100) as claimed in claim 4, wherein the annular ridge (223) has a seal groove (2231), and an outer end surface of the neck body (141) forms an insert ring (142), the insert ring (142) is inserted into the seal groove (2231), and the seal (30) is clamped between an outer end of the insert ring (142) and an inner wall of the seal groove (2231).

7. The high-pressure gas cylinder (100) as claimed in claim 6, wherein an outer circumferential surface of the neck body (141) forms an external thread (143), and an inner circumferential surface of the socket portion (222) forms an internal thread (222A), the external thread (143) of the neck body (141) is screwed to the internal thread (222A) of the socket portion (222).

8. The high-pressure gas cylinder (100) as claimed in claim 7, wherein an inner diameter of the insert ring (142) is larger than an inner diameter of the neck body (141), and an outer diameter of the insert ring (142) is smaller than an outer diameter of the neck body (141), a diameter of an inner circumferential surface of the seal groove (2231) is equal to the inner diameter of the insert ring (142), and a diameter of an outer circumferential surface of the seal groove (2231) is equal to the outer diameter of the insert ring (142).

9. The high-pressure gas cylinder (100) as claimed in claim 7, wherein a sum of a depth (H1) of the insert ring (142) inserted into the seal groove (2231) and a thickness (H2) of the seal (30) is greater than a depth (H3) of the seal groove (2231).

10. The high-pressure gas cylinder (100) as claimed in claim 1, wherein an outer surface of the shoulder receiving portion (123) forms a shoulder recess (124), and a side of the shoulder (24, 24A) toward the liner (10) is fitted into the shoulder recess (124).

11. The high-pressure gas cylinder (100) as claimed in claim 1, wherein the bottle body (12) is combined with a tail block (126) at a center of a side away from the neck (14), and a part of the composite material shell (40, 40A, 40B) corresponding to the tail block (126) covers an outer circumferential surface of the tail block (126).

12. The high-pressure gas cylinder (100) as claimed in claim 11, wherein the bottle body (12) forms a post (125) at the center of the side away from the neck (14), and the post (125) protrudes from the bottle body (12) toward a direction away from the neck (14), the tail block (126) forms a receiving hole (127) fitting the post (125), the receiving hole (127) is fitted on the post (125), and the tail block (126) is bonded to an end of the bottle body (12) having the post (125).

13. The high-pressure gas cylinder (100) as claimed in claim 11, wherein the bottle body (12) forms a post (125) at the center of the side away from the neck (14), and the post (125) is a screw rod protruding from the bottle body (12) toward a direction away from the neck (14), the tail block (126) forms a receiving hole (127) fitting the post (125), the receiving hole (127) is a screw hole and is screwed to the post (125), screwing and locking the tail block (126) to an end of the bottle body (12) having the screw rod.

14. The high-pressure gas cylinder (100) as claimed in claim 1, wherein an annular concave surface (26A) is formed between an outer circumferential surface of the boss (22A) and an outer circumferential surface of the shoulder (24, 24A).

15. The high-pressure gas cylinder (100) as claimed in claim 1, wherein an outer circumferential surface of the boss (22, 22A, 22B) forms a protruding ring (28B), and the protruding ring (28B) protrudes from the outer circumferential surface of the boss (22, 22A, 22B), a part of the composite material shell (40, 40A, 40B) corresponding to the boss (22, 22A, 22B) covers a part of the outer circumferential surface of the boss (22, 22A, 22B) located within the protruding ring (28B).
